# EUROPÄISCHE PATENTSCHRIFT

(11) **EP 2 434 291 B1**
(45) Veröffentlichungstag und Bekanntmachung des Hinweises auf die Patenterteilung: **07.12.2016**
(21) Anmeldenummer: 10178997.2
(22) Anmeldetag: 23.09.2010
(51) Int. Cl.: B01L 3/00, G01N 35/00

(54) **Verfahren zur automatisierten Bestimmung eines Analyts**
Method for automated detection of an analyte
Procédé de détermination automatisée d'un analyte

(43) Veröffentlichungstag der Anmeldung: 28.03.2012
(73) Patentinhaber: Hach Lange GmbH, 14163 Berlin (DE)
(72) Erfinder: Lenhard, Markus, 41751, Viersen (DE); Battefeld, Manfred, 40211 Düsseldorf (DE); Gassner, Bernd, 41469 Neuss (DE); De Heij, Baas, 41542 Dormagen (DE); Hanschke, Clemens, 14167 Berlin (DE)
(74) Vertreter: ter Smitten, Hans

(56) Entgegenhaltungen:
- WO-A1-2006/103083
- WO-A1-2007/086794
- WO-A1-2010/043067
- DE-A1- 4 109 118
- US-A1- 2004 086 173
- US-A1- 2008 254 544
- US-B1- 7 303 139

## Beschreibung

Die Erfindung betrifft ein Verfahren zur automatisierten Bestimmung eines Analyts einer Flüssigkeitsprobe in einer kreisrunden Küvette in einem Flüssigkeitsanalysegerät.

Die Erfindung bezieht sich insbesondere auf die Bestimmung eines Analyts einer Wasserprobe. Ein derartiges Verfahren ist bekannt aus DE 41 09 118 A1. Hierbei weist die Küvette einen 1-dimensionalen Barcode auf, der eine Information über das zu bestimmende Analyt enthält. Eine Küvette ist ein für die Fotometrie geeignetes Gefäß, das für die Messstrahlung transparent ist und in das die Flüssigkeitsprobe eingebracht und mit dem Reagenz gemischt wird. Das Flüssigkeitsanalysegerät weist eine Drehvorrichtung auf, mit der die in das Flüssigkeitsanalysegerät eingesetzte Küvette gedreht werden kann. Die Küvette wird durch die Drehvorrichtung sowohl während des Lesens des in Umfangsrichtung auf der Küvette angebrachten Barcodes als auch während der Fotometrierung gedreht.

Für eine exakte quantitative Bestimmung des Analyts müssen die von dem Fotometer ermittelten Messsignale mit Hilfe von dem jeweiligen Analyt zugeordneten Kalibrierdaten in entsprechende Quantitäts-Messwerte umgerechnet werden.

Aus US 7,303,139 B1 ist ein Verfahren bekannt, bei dem ein Reagenzgefäß einen Aufkleber mit einem Bildzeichen aufweist, das in einem Gerät mit Hilfe einer Kamera verifiziert werden kann.

Aus WO 2006/103083 A1 werden Blutzucker-Meßstäbchen beschrieben, auf denen eine Chargennummer gespeichert ist, die von dem Blutzucker-Meßgerät gelesen werden kann. In dem Blutzucker-Meßgerät wird die eingelesene Chargennummer mit der Chargennummer der abgespeicherten Kalibrierdaten verglichen. Bei Nichtübereinstimmung können die Kalibrierdaten über einen anderen Kalibrierdaten-Speicher-Streifen eingelesen werden.

WO 2010/043067 A1 offenbart eine Prüfstücklesevorrichtung, wobei eine manuelle Eingabe der Kalibrierdaten möglich ist, falls der Barcode unlesbar ist.

Aufgabe der Erfindung ist es demgegenüber, ein Verfahren zur quantitativen Bestimmung eines Analyts einer Flüssigkeitsprobe in einem Flüssigkeitsanalysegerät zu schaffen, bei dem die fehlerfreie Verwendung der Kalibrierdaten sichergestellt ist.

Diese Aufgabe wird erfindungsgemäß gelöst mit einem Verfahren mit den Merkmalen des Patentanspruches 1.

Das erfindungsgemäße Verfahren bezieht sich auf die automatisierte Bestimmung eines Analyts einer Flüssigkeitsprobe in einer kreisrunden bzw. zylindrischen Küvette in dem Flüssigkeitsanalysegerät. Die Küvette weist ein mit dem Analyt farbverändernd reagierendes Reagenz auf. Ferner weist die Küvette an der Küvetten Außenseite einen 1- oder 2-dimensionalen Barcode und ein separates 2 -dimensionales Bildzeichen auf. Das Bildzeichen kann beispielsweise ein Warenzeichen, eine Handelsmarke, eine Marke oder ein anderes flächiges Kennzeichen des Herstellers bzw. Lieferanten der mit dem Reagenz gefüllten Küvette sein.

Das Flüssigkeitsanalysegerät weist neben einem Fotometer und einer Drehvorrichtung zum Drehen der eingesetzten Küvette eine Zeilen- oder Flächen- Kamera zum Einlesen des Barcodes und des Bildzeichens auf. Grundsätzlich ist es vorteilhaft, eine einzige Kamera zum Lesen sowohl des Barcodes als auch des Bildzeichens vorzusehen. Grundsätzlich können hierfür jedoch auch zwei separate Kamera vorgesehen sein. Ferner weist das Flüssigkeitsanalysegerät einen elektronischen Kalibrierdaten-Speicher zum Speichern von Kalibrierdaten einer Charge eines Reagenzes auf. Unter einer Reagenz-Charge ist beispielsweise die Gesamtheit aller mit einem Reagenz mit identischen Kalibrierdaten gefüllten Küvetten zu verstehen.

Das Flüssigkeitsanalysegerät weist ferner einen elektronischen Speicher zum Speichern eines Bildzeichen-Musters auf. Schließlich weist das Flüssigkeitsanalysegerät eine Eingabevorrichtung zur manuellen Eingabe von Reagenz-Kalibrierdaten auf. Die Eingabevorrichtung kann beispielsweise eine Tastatur, eine Taste, ein Drehknopf, ein Touchscreen oder eine andere manuelle Eingabevorrichtung sein.

Gemäß dem erfindungsgemäßen Verfahren wird die in das Flüssigkeitsanalysegerät eingesetzte Küvette durch die Drehvorrichtung gedreht, wobei auf diese Weise das Bildzeichen mit der Kamera rotatorisch so ausgerichtet wird, dass das Bildzeichen von der Kamera in das Flüssigkeitsanalysegerät als Foto eingelesen werden kann. Anschließend wird das eingelesene Bildzeichen-Foto mit dem gespeicherten Bildzeichen-Muster verglichen. Wenn das eingelesene Bildzeichen-Foto mit dem gespeicherten Bildzeichen-Muster nicht übereinstimmt, wird die Eingabevorrichtung für die manuelle Eingabe der Kalibrierdaten des Reagenzes aktiviert, und gegebenenfalls der Bediener zur manuellen Eingabe der Kalibrierdaten aufgefordert. Nach der manuellen Eingabe der Kalibrierdaten wird die Flüssigkeitsprobe fotometriert und dabei das Messsignal mit Hilfe der eingegebenen Kalibrierdaten in einen entsprechenden Messwert umgerechnet.

Wenn das eingelesene Bildzeichen-Foto mit dem gespeicherten Bildzeichen-Muster innerhalb einer festgelegten Toleranz übereinstimmt, wird das Messsignal aus der Fotometrie mit Hilfe der in dem Kalibrierdaten-Speicher gespeicherten Kalibrierdaten in einen entsprechenden Messwert umgerechnet.

Die Kalibrierdaten aus dem Kalibrierdaten-Speicher werden zur Bestimmung des Messwertes also nur dann verwendet, wenn die Küvette das Bildzeichen des Küvetten-Herstellers bzw. -Lieferanten aufweist. Auf diese Weise wird sichergestellt, dass bei der Verwendung von Küvetten eines Fremd-Herstellers beziehungsweise Fremd-Lieferanten nicht die Kalibrierdaten des Original-Herstellers bzw. -Lieferanten verwendet werden, was zwangsläufig zu falschen Messwerten führen würde. Auf diese Weise wird eine fehlerfreie Verwendung von Kalibrierdaten bei der Ermittlung des Messwertes sichergestellt.

Gemäß einer bevorzugten Ausgestaltung kann der Barcode eine Analyt-Chargenkennzeichnung enthalten, wobei mit Hilfe der Kamera zunächst die Chargenkennzeichnung auf dem Barcode der eingesetzten Küvette gelesen wird, und anschließend überprüft wird, ob zu der von der Kamera gelesenen Chargenkennzeichnung in dem Kalibrierdaten-Speicher schon Kalibrierdaten gespeichert sind. Wenn zu der gelesenen Chargenkennzeichnung bereits Kalibrierdaten in dem Kalibrierdatenspeicher gespeichert sind, wird mit dem Fotometrieren der Flüssigkeitsprobe fortgefahren.

Wenn zu der gelesenen Chargenkennzeichnung jedoch noch keine Kalibrierdaten in dem Kalibrierdaten-Speicher gespeichert sind, wird eine Aufforderung zum Einlesen der Kalibrierdaten zu der neuen Chargenkennzeichnung ausgegeben. Das Einlesen der Kalibrierdaten kann beispielsweise dadurch erfolgen, dass ein den Küvetten zugeordnetes RFID-Etikett, in dem die Kalibrierdaten zu der betreffenden Chargenkennzeichnung gespeichert sind, an ein entsprechendes Lesegerät des Flüssigkeitsanalysegerätes gehalten wird, wobei das Lesegerät die entsprechenden Kalibrierdaten aus dem RFID-Etikett automatisch einliest und - der betreffenden Chargenkennzeichnung zugeordnet - in dem Kalibrierdatenspeicher abspeichert.

Gemäß einer alternativen oder ergänzenden Ausführungsform kann der Barcode die Kalibrierdaten der betreffenden Küvette beziehungsweise Charge enthalten, wobei die der Barcode mit den Kalibrierdaten mit Hilfe der Kamera gelesen und die Kalibrierdaten in dem Kalibrierdaten-Speicher schließlich gespeichert werden. Das Lesen der Kalibrierdaten von dem Barcode kann bei jeder Messung erfolgen, erfolgt jedoch bevorzugt nur dann, wenn erstmals eine Küvette einer neuen Charge, zu der noch keine Kalibrierdaten in dem Kalibrierdatenspeicher gespeichert sind, in das Flüssigkeitsanalysegerät eingesetzt wird.

Gemäß einer bevorzugten Ausgestaltung stehen bei allen Küvetten der Barcode und das Bildzeichen in einer konstanten bekannten geometrischen Zuordnung zueinander, wobei mit der Kamera zunächst die rotatorische und gegebenenfalls höhenmäßige Position des Barcodes auf der Küvette ermittelt wird, und anschließend mit Hilfe der bekannten geometrischen Zuordnung die Position des Bildzeichens aus der Position des Barcodes bestimmt wird. Da aus der Position des Barcodes die Position des Bildzeichens auf der Küvette bekannt ist, muss das Bildzeichen auf der Küvette nicht mehr gesucht werden, sondern kann die Drehvorrichtung das Bildzeichen auf der Küvette exakt vor die Kamera drehen, so dass der gesamte Bildzeichen- Leseprozess zeitsparend erfolgen kann.

Vorzugsweise weist das Flüssigkeitsanalysegerät eine Beleuchtungsvorrichtung mit einer Lichtquelle zum Beleuchten des Bildzeichens auf der Küvette auf. Durch die Beleuchtung der Küvette wird das Nutzsignal der Kamera vergrößert, so dass die Qualität des Bildzeichen-Fotos verbessert wird. Ferner kann die so genannte Belichtungszeit der Kamera entsprechend verkürzt werden, so dass ein Foto des Bildzeichens unter Umständen sogar während einer Drehbewegung der Küvette gemacht werden kann.

Gemäß einer bevorzugten Ausgestaltung wird die Beleuchtungsvorrichtung beziehungsweise die Lichtquelle der Beleuchtungsvorrichtung gepulst betrieben. Im Pulsbetrieb kann die Beleuchtungsvorrichtung beziehungsweise die Lichtquelle kurzzeitig eine erheblich höhere Lichtleistung liefern als im Dauerbetrieb. Auch hierdurch wird die Belichtungszeit der Kamera entsprechend verkürzt.

Vorzugsweise weist die Beleuchtungsvorrichtung einen Lichtleiter auf, der das Licht von der Lichtquelle zu der eingesetzten Küvette leitet. Die Lichtquelle, beispielsweise eine Leuchtdiode, kann auf einer Hauptplatine angeordnet werden, die die gesamte Elektronik des Flüssigkeitsanalysegerätes aufweist. Eine separate Platine für die Lichtquelle und ihre Ansteuerung ist nicht erforderlich. Das Licht wird von der Lichtquelle auf der Hauptplatine durch den Lichtleiter zu dem Küvetten-Schacht in die Nähe der Kamera geleitet.

Vorzugsweise weist die Beleuchtungsvorrichtung einen Helligkeitssensor und einen Helligkeitsregler auf. Der Helligkeitssensor ist an dem Küvetten-Schacht befestigt und ist dem Barcode und dem Bildzeichen der eingesetzten Küvette räumlich so zugeordnet, dass der Helligkeitssensor die Helligkeit des von dem Barcode und dem Bildzeichen reflektierten Lichts, also des Nutzsignals für die Kamera, ermittelt. Die Leistung der Lichtquelle wird mit Hilfe des Helligkeitssensor so geregelt, dass der Kontrast des von der Kamera empfangenen Nutzsignals möglichst optimal eingestellt ist.

Im Folgenden wird das erfindungsgemäße Verfahren anhand der Zeichnungen näher erläutert. Es zeigen:
- Figur 1: eine schematische Darstellung eines Flüssigkeitsanalysegerätes zur Durchführung des erfindungsgemäßen Verfahrens, und
- Figur 2: einen Küvetten-Behälter mit einem RFID-Etikett und mehreren Küvetten einer Charge.

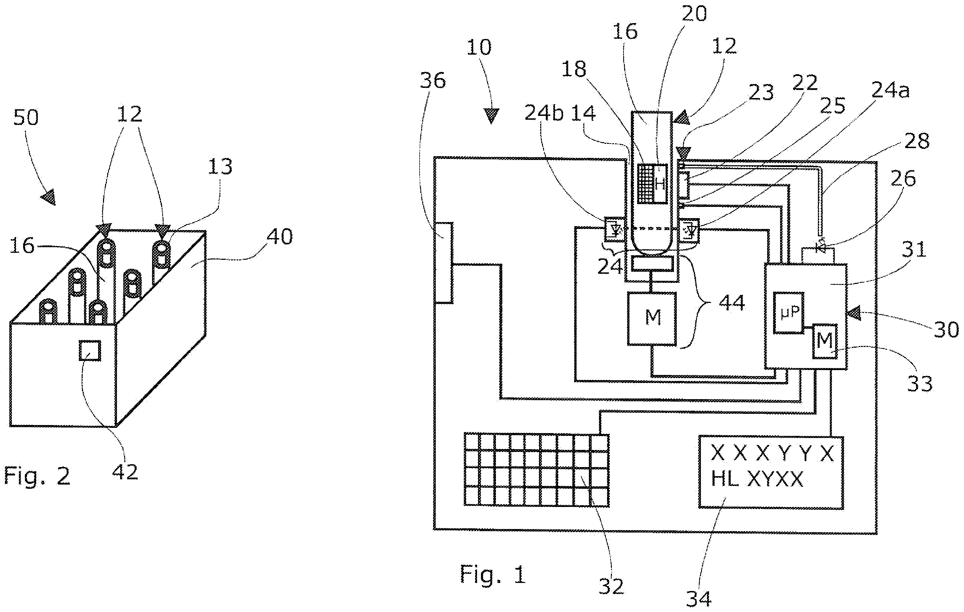

In Figur 1 ist ein Flüssigkeitsanalysegerät 10 mit einer in einen Küvetten-Schacht 14 eingesetzten Küvette 12 dargestellt. Das Flüssigkeitsanalysegerät 10 ist ein so genanntes Laborgerät und dient der Analyse verschiedener fotometrisch bestimmbarer Analyte in Wasser, beispielsweise in Abwasser, geklärtem Abwasser oder Trinkwasser.

Die Küvette 12 wird von einem zylindrischen Glaskörper 16 gebildet, der einen aufgeklebten 2-dimensionalen Barcode 18 und ein in Umfangrichtung an den Barcode 18 angrenzendes 2-dimensinales Bildzeichen 20 aufweist. In den Glaskörper 16 ist durch den Küvetten-Hersteller ein Reagenz bestimmter Menge, Konzentration und Qualität eingefüllt, das der Bestimmung eines bestimmten Analyts einer Flüssigkeitsprobe dient. Die Küvette 12 besteht also aus dem Glaskörper 16, dem Barcode 18, dem Bildzeichen 20 und dem Reagenz. Die Küvette 12 ist bei Nichtgebrauch mit einem flüssigkeitsdicht abschließenden Schraubdeckel 13 verschlossen, wie im Figur 2 erkennbar ist.

Der Barcode 18 enthält in kodierter Form Informationen über die Art des Tests, also über das mit dem Reagenz bestimmbare Analyt, Informationen über die Herstellung und Haltbarkeit sowie eine Chargenkennzeichnung, die bei allen Küvetten einer Charge gleich ist. Eine Küvetten-Charge ist in Bezug auf das Reagenz vollständig homogen. Einer Küvetten-Charge ist ein einziger Satz an Kalibrierdaten zugeordnet, die dazu dienen, aus einem fotometrischen Messsignal einen genauen quantitativen Messwert für das zu bestimmende Analyt zu errechnen.

Das Bildzeichen 20 kann beispielsweise eine für alle Küvetten eines Herstellers identische Produkt- oder Herstellerkennzeichnung sein, und kann, muss jedoch nicht, auch einen Wortbestandteil aufweisen. Das Bildzeichen 20 sollte dabei möglichst kontraststark sein, beispielsweise nur schwarz-weiß sein.

Der Barcode 18 und das Bildzeichen 20 sind in solcher Höhe auf den Glaskörper 16 aufgebracht, dass sie bei in Küvetten-Schacht 14 eingesetzter Küvette 12 höhenmäßig innerhalb des Küvetten-Schachtes 14 angeordnet sind und radial mit einer Linien-Kamera 22 fluchten, die an der Wand des Küvetten-Schachtes 14 angeordnet ist. Der Barcode 18 und das Bildzeichen 20 sind geometrisch in einer festen konstanten Zuordnung zueinander angeordnet. Hierdurch ist es möglich, aus der Lage des Barcodes 18, der als erstes von der Kamera 22 gefunden und gelesen werden muss, auf die genaue Lage des Bildzeichens 20 zu schließen. Das Bildzeichen 20 muss daher nicht mehr gesucht werden, sondern kann durch die Drehvorrichtung 44 direkt mit der Kamera 22 ausgerichtet werden.

Die Kamera 22 ist eine vertikal ausgerichtete Zeilen-Kamera mit einer Auflösung von beispielsweise 320 Pixeln. Alternativ kann die Kamera 22 auch als Flächen-Kamera ausgebildet sein. In diesen Fall müssten für die Auswertung der Kamera-Fotos entsprechende Entzerrungen der Kamera-Fotos vorgenommen werden.

Unterhalb der Kamera 22 ist ein Fotometer 24 angeordnet, das von einem Fotometer-Sender 24a und einem Fotometer-Empfänger 24b gebildet wird. Das Fotometer 24 dient der fotometrischen Bestimmung des Analyts einer in die Küvette 16 pipettierten Flüssigkeitsprobe, die in einem bestimmten Spektralbereich farbverändernd mit dem Reagenz in der Küvette 16 reagiert. Die Veränderung der Transmission in dem betreffenden Spektralbereich wird durch das Fotometer 24 in Form eines Messsignals ermittelt, das an eine Gerätesteuerung 30 übertragen wird.

Das Flüssigkeitsanalysegerät 10 weist einen Drehvorrichtung 44 mit einem Drehteller auf, mit der die in den Küvetten-Schacht 14 eingesetzte Küvette 12 um die Küvetten-Längsachse definiert schrittweise gedreht werden kann.

Das Flüssigkeitsanalysegerät 10 weist eine Beleuchtungsvorrichtung 23 auf, die an der Wand des Küvetten-Schachtes 14 angebracht und der Kamera 22 räumlich zugeordnet ist, und die bei Bedarf den Barcode 18 und das Bildzeichen 20 auf dem Küvetten-Glaskörper 16 beleuchtet. Die Beleuchtungsvorrichtung 23 besteht aus einer LED-Lichtquelle 26, die auf einer Hauptplatine 31 der Gerätesteuerung 30 angeordnet ist, und einem Kunststoff-Lichtleiter 28, der das Licht der Lichtquelle 26 zu dem Küvetten-Schacht 14 leitet. Im Betrieb wird die Lichtquelle 26 gepulst betrieben, um bei kurzzeitig hoher Lichtleistung eine Überhitzung der Lichtquelle 26 zu vermeiden.

Das Flüssigkeitsanalysegerät 10 weist eine manuelle Eingabevorrichtung 32 in Form einer Tastatur und eine Anzeigevorrichtung 34 in Form eines Bildschirms auf. Ferner weist das Flüssigkeitsanalysegerät 10 einen RFID-Sender/Empfänger 36 auf, der aus einem RFID-Etikett 42 an dem Küvetten-Verpackungskörper 40 Kalibrierdaten auslesen kann.

Die Zentraleinheit 30 weist einen digitalen Kalibrierdaten-Speicher 33 auf, in dem die Kalibrierdaten einer Küvetten-Charge oder mehrerer Küvetten-Chargen gespeichert werden.

In Figur 2 ist eine Küvetten-Verpackungseinheit 50 dargestellt, die aus einem Küvetten-Verpackungskörper 40, mehreren Küvetten 12 einer Charge und einem RFID-Etikett 42 mit Kalibrierdaten der betreffenden Küvetten-Charge besteht.

Das Verfahren zur automatisierten Bestimmung eines Analyts einer Flüssigkeitsprobe läuft wie folgt ab:
Zunächst wird eine Küvette 12 aus dem Verpackungskörper 40 entnommen, und wird der Schraubdeckel 13 von dem Küvetten-Glaskörper 16 abgeschraubt. Anschließend wird mit einer Pipette eine Flüssigkeitsprobe definierter Menge in die Küvette 12 gegeben. Das zu untersuchende Analyt der Flüssigkeitsprobe reagiert mit dem Reagenz in der Küvette 12 farbverändernd. Die Küvette 12 wird daraufhin in den Küvetten-Schacht 14 eingesetzt, wobei durch das Fotometer 24 eine sprunghafte Verringerung der Transmission festgestellt wird, wodurch wiederum ein Messzyklus ausgelöst wird.

Die Gerätesteuerung 30 veranlasst daraufhin ein Einschalten der Beleuchtungsvorrichtung 23 und ein Drehen der Küvette 12 durch die Drehvorrichtung 44, um den Barcode 18 mit Hilfe der Kamera 21 mit der Kamera 22 auszurichten. Die Kamera 22 macht ein Barcode-Foto, das von der Gerätesteuerung 30 ausgewertet und gelesen wird. Hierbei wird die Leistung der Lichtquelle 26 mit Hilfe des Helligkeitssensors 25 so geregelt, dass das Barcode-Foto einen optimalen Kontrast aufweist. Nachdem die Kamera 22 das Barcode-Foto gemacht hat, dreht die Drehvorrichtung 44 die Küvette 12 um einen bekannten Differenz-Drehwinkel weiter, so dass das Bildzeichen 20 mit der Kamera 22 ausgerichtet wird.

Das Bildzeichen 20 wird von der Kamera 22 eingelesen, das heißt, die Kamera 22 macht ein Bildzeichen-Foto. Die Gerätesteuerung 30 vergleicht das Bildzeichen-Foto mit einem dauerhaft abgespeicherten Bildzeichen-Muster, und fährt bei Übereinstimmung des Bildzeichen-Fotos mit dem Bildzeichen-Muster mit der Chargenidentifikation fort. Hierbei wird aus dem eingelesenen Barcode 18 die Chargenidentifikation der eingesetzten Küvette 12 ermittelt. Wenn in dem Kalibrierdaten-Speicher 33 die Kalibrierdaten zu dieser Chargenidentifikation bereits gespeichert sind, wird mit dem Fotometrieren fortgefahren.

Wenn zu der Chargenidentifikation noch keine Kalibrierdaten in dem Kalibrierdaten-Speicher 33 gespeichert sind, wird der Bediener über ein akustisches Signal und durch die Anzeigevorrichtung 34 aufgefordert, die Kalibrierdaten zu dieser Chargenidentifikation einzulesen. Dies erfolgt dadurch, dass das RFID-Etikett 42 an dem Küvetten-Verpackungskörper 40 unmittelbar vor den RFID-Sender/Empfänger der Flüssigkeitsanalysegerätes 10 gehalten wird. Sobald eine Funkverbindung zwischen dem RFID-Etikett 42 und dem RFID-Sender/Empfänger hergestellt ist, werden die Kalibrierdaten dieser Küvetten-Charge in den Kalibrierdaten-Speicher 33 übertragen und dort gespeichert. Anschließend wird mit dem Fotometrieren fortgefahren.

Bei Nicht-Übereinstimmung des Bildzeichen-Fotos mit dem Bildzeichen-Muster wird der Benutzer durch die Anzeigevorrichtung 34 zur manuellen Eingabe der Kalibrierdaten über die manuelle Eingabevorrichtung 32 aufgefordert. Sobald die Kalibrierdaten durch den Benutzer über die Eingabevorrichtung 32 eingegeben sind, wird mit dem Fotometrieren fortgefahren.

Zum Fotometrieren schaltet die Gerätesteuerung 30 das Fotometer 24 ein, wobei die Drehvorrichtung 44 die Küvette 12 zur Vornahme mehrerer Messungen bei verschiedenen Küvetten-Drehwinkeln intervallweise dreht. Die von dem Fotometer 24 auf diese Weise gewonnenen mehreren Messsignale werden in der Gerätesteuerung mit Hilfe der in dem Kalibrierdaten-Speicher 33 gespeicherten beziehungsweise der manuell eingegebenen Kalibrierdaten in entsprechende Messwerte umgerechnet, die die Konzentration des Analyts in der Flüssigkeitsprobe angeben. Aus den mehreren Messwerten werden so genannte Ausreißer gestrichen, und aus den verbleibenden Messwerten ein Mittelwert gebildet, der von der Anzeigevorrichtung 34 angezeigt wird.

## Patentansprüche

1. Verfahren zur automatisierten Bestimmung eines Analyts einer Flüssigkeitsprobe in einer zylindrischen Küvette (12) in einem Flüssigkeitsanalysegerät (10),
wobei die Küvette (12) ein mit dem Analyt farbverändernd reagierendes Reagenz und an der Küvettenaußenseite einen 1- oder 2-dimensionalen Barcode (18) und ein 2-dimensionales Bildzeichen (20) aufweist, und
wobei das Flüssigkeitsanalysegerät (10) ein Fotometer (24), eine Drehvorrichtung (44) zum Drehen der eingesetzten Küvette (12), eine Zeilen- oder Flächen-Kamera (21) zum Einlesen des Barcodes (18) und des Bildzeichens (20), einen Kalibrierdaten-Speicher (33) und eine Eingabevorrichtung (32) zur manuellen Eingabe von dem Reagenz zugeordneten Kalibrierdaten aufweist,
mit den Verfahrensschritten:
Drehen der Küvette (12) und Ausrichten des Bildzeichens (20) mit der Kamera (22),
Einlesen des Bildzeichens (20) mit der Kamera (22),
Vergleichen des eingelesenen Bildzeichens mit einem in dem Flüssigkeitsanalysegerät (10) gespeicherten Muster des Bildzeichens,
bei Nichtübereinstimmung des eingelesenen Bildzeichens mit dem Bildzeichen-Muster: Aktivierung der Eingabevorrichtung (32) zur manuellen Eingabe der Kalibrierdaten, und
Fotometrieren der Küvette (12) auf Grundlage der manuell eingegebenen oder der in dem Kalibrierdaten-Speicher (33) gespeicherten Kalibrierdaten.

2. Verfahren zur automatisierten Bestimmung eines Analyts einer Flüssigkeitsprobe nach Anspruch 1, wobei der Barcode (18) Kalibrierdaten aufweist, mit den Verfahrensschritten:
Lesen der Kalibrierdaten auf dem Barcode (18) mit der Kamera (22), und
Speichern der eingelesenen Kalibrierdaten in dem Kalibrierdaten-Speicher (33).

3. Verfahren zur automatisierten Bestimmung eines Analyts einer Flüssigkeitsprobe nach Anspruch 1 oder 2, wobei der Barcode (18) eine Analyt-Chargenkennzeichnung enthält, mit den Verfahrensschritten:
Lesen der Chargenkennzeichnung auf dem Barcode (18),
Überprüfen, ob zu der gelesenen Chargenkennzeichnung Kalibrierdaten in dem Kalibrierdaten-Speicher (33) gespeichert sind,
wenn zu der gelesenen Chargenkennzeichnung keine Kalibrierdaten gespeichert sind: Ausgabe einer Aufforderung zum Einlesen der Kalibrierdaten zu der neuen Chargenkennzeichnung.

4. Verfahren zur automatisierten Bestimmung eines Analyts einer Flüssigkeitsprobe nach einem der vorangegangenen Ansprüche, wobei der Barcode (18) und das Bildzeichen (20) auf der Küvette (1) in fester Zuordnung zueinander stehen, mit den Verfahrensschritten:
Ermittlung der rotatorischen Position des Barcodes (18) auf der Küvette (12) mit der Kamera (22), und
Errechnen der Position des Bildzeichens (20) auf der Küvette aus der Position des Barcodes (18).

5. Verfahren zur automatisierten Bestimmung eines Analyts einer Flüssigkeitsprobe nach einem der vorangegangenen Ansprüche, wobei das Flüssigkeitsanalysegerät (10) eine Beleuchtungsvorrichtung (23) zum Beleuchten des Barcodes (18) und/oder des Bildzeichens (20) auf der Küvette (12) aufweist, mit dem Verfahrensschritt:
Beleuchten der Küvette (12) während des Einlesens des Barcodes (18) und/oder des Bildzeichens (20).

6. Verfahren zur automatisierten Bestimmung eines Analyts einer Flüssigkeitsprobe nach Anspruch 5, wobei die Beleuchtungsvorrichtung (23) gepulst betrieben wird.

7. Verfahren zur automatisierten Bestimmung eines Analyts einer Flüssigkeitsprobe nach Anspruch 5 oder 6, wobei die Beleuchtungsvorrichtung (23) einen Lichtleiter (28) aufweist, der das Licht von einer Lichtquelle (26) zu der eingesetzten Küvette (12) leitet.

8. Verfahren zur automatisierten Bestimmung eines Analyts einer Flüssigkeitsprobe nach einem der Ansprüche 5 bis 7, wobei die Beleuchtungsvorrichtung (23) einen Helligkeitssensor (25), der dem Barcode (18) und dem Bildzeichen (20) der eingesetzten Küvette (12) räumlich zugeordnet ist, und einen Heiligkeitsregler aufweist, mit dem Verfahrensschritt
Regeln der Licht-Leistung der Lichtquelle (26) in Abhängigkeit von der von dem Helligkeitssensor (25) gemessenen Helligkeit.

## Claims

1. A method for automatically determining an analyte of a liquid sample in a cylindrical cuvette (12) in a liquid analysis device (10),
wherein the cuvette (12) comprises a reagent which is configured to react with the analyte in a color-changing manner and a barcode configured either as a one-dimensional barcode or as a two-dimensional barcode and an icon (20) with two dimensions on an outside of the cuvette, and
wherein the liquid analysis device (10) comprises a photometer (24), a rotation device (44) which is configured to rotate a cuvette (12) inserted therein, a line or area camera (21) which is configured to read the barcode (18) and the icon (20), a calibration data memory (33) and an input device (32) which is configured to manually input calibration data associated with the reagent,
the method comprising the following steps:
rotating the cuvette (12) and aligning the icon (20) with the camera (22),
reading the icon (20) with the camera (22),
comparing the icon (20) read with an icon model stored in the liquid analysis device (10),
if the icon read does not correspond to the icon model: activating the input apparatus (32) for manually inputting the calibration data, and
subjecting the cuvette (12) to photometry on the basis of the calibration data which have been manually input or have been stored in the calibration data memory (33).

2. The method for automatically determining an analyte of a liquid sample as recited in claim 1, wherein the barcode (18) comprises calibration data, the method further comprising the following steps:
reading the calibration data on the barcode (18) with the camera (22); and
storing the calibration data read in the calibration data memory (33).

3. The method for automatically determining an analyte of a liquid sample as recited in claim 1 or 2, wherein the barcode (18) comprises an analyte batch identification, the method further comprising the following steps:
reading the batch identification on the barcode (18),
checking whether calibration data are stored in the calibration data memory (33) for the batch identification read, and
if no calibration data are stored for the analyte charge identification read: outputting a prompt to read-in the calibration data for a new batch identification.

4. The method for automatically determining an analyte of a liquid sample as recited in one of the preceding claims, wherein the barcode (18) and the icon (20) are provided in a fixed relation relative to each other on the cuvette (12), the method further comprising the following steps::
determining a rotational position of the barcode (18) on the cuvette (12) with the camera (22), and
calculating a position of the icon (20) on the cuvette from the rotational position of the barcode (18).

5. The method for automatically determining an analyte of a liquid sample as recited in one of the preceding claims, wherein the liquid analysis device (10) comprises a lighting device (23) which is configured to iliuminate at least one of the barcode (18) and the icon (20) on the cuvette (12), the method further comprising the following step:
illuminating the cuvette (12) while reading at least one of the barcode (18) and the icon (20).

6. The method for automatically determining an analyte of a liquid sample as recited in claim 5, wherein the lighting device (23) is operated in a pulsed manner.

7. The method for automatically determining an analyte of a liquid sample as recited in claim 5 or 6, wherein the lighting device (23) comprises an optical light guide (28) which is configured to guide a light from a light source (26) to the cuvette (12).

8. The method for automatically determining an analyte of a liquid sample as recited in one of claims 5 to 7, wherein the lighting device (23) comprises a brightness sensor (25) which is spatially associated with the barcode (18) and the icon (20) of the inserted cuvette (12), and further comprises a brightness control, the method further comprising the following step:
controlling a light output of the light source (26) as a function of the brightness measured by the brightness sensor (25).

## Revendications

1. Procédé de détermination automatisée d'un analyte d'un échantillon de fluide dans une cuvette cylindrique (12) dans un dispositif d'analyse des fluides (10),
la cuvette (12) contenant un réactif réagissant avec l'analyte par changement de couleur et comportant sur la face extérieure de la cuvette un code à barres (18) unidimensionnel ou bidimensionnel et un signe figuratif (20) bidimensionnel, et
le dispositif d'analyse des fluides (10) comportant un photomètre (24), un dispositif de rotation (44) pour tourner la cuvette (12) insérée, une caméra linéaire ou de surface (21) pour la lecture du code à barres (18) et du signe figuratif (20), un mémoire de données de calibration (33) et un moyen d'entrée (32) pour l'entrée manuelle de données de calibration associées au réactif,
avec les étapes de procédé suivantes:
tourner la cuvette (12) et aligner le signe figuratif (20) avec la caméra (22),
lire le signe figuratif (20) par la caméra (22),
comparer le signe figuratif lu à un modèle du signe figuratif stocké dans le dispositif d'analyse des fluides (10),
en cas de non-conformité du signe figuratif lu avec le modèle du signe figuratif: activation du moyen d'entrée (32) pour l'entrée manuelle des donnée de calibration, et
soumettre la cuvette (12) à une photométrie sur las base des données de calibration entrées manuellement ou stockées dans le mémoire de données de calibration (33).

2. Procédé de détermination automatisée d'un analyte d'un échantillon de fluide selon la revendication 1, dans lequel ledit code à barres (18) comprend des données de calibration, avec les étapes de procédé suivantes:
lire les données de calibration sur le code à barres (18) avec la caméra (22), et
stocker les données de calibration lues dans le mémoire de données de calibration (33).

3. Procédé de détermination automatisée d'un analyte d'un échantillon de fluide selon la revendication 1 ou 2, dans lequel le code à barres (18) comporte une identification du lot d'analyte, avec les étapes de procédé suivantes:
lire l'identification du lot sur le code à barres (18),
vérifier si des données de calibration sont stocker dans le mémoire de données calibration (33) pour l'identification du lot lu,
si aucunes données de calibration ne sont stockées pour l'identification du lot lu: émettre une requête pour lire les données de calibration du nouveau identification du lot.

4. Procédé de détermination automatisée d'un analyte d'un échantillon de fluide selon l'une quelconque des revendications précédentes, dans lequel le code à barres (18) et le signe figuratif (20) sont disposés en association fixe l'un à l'autre sur la cuvette (12), avec les étapes de procédé suivantes:
déterminer la position rotative du code à barres (18) sur la cuvette (12) avec la caméra (22), et
calculer la position du signe figuratif (20) sur la cuvette sur la base de la position du code à barres (18).

5. Procédé de détermination automatisée d'un analyte d'un échantillon de fluide selon l'une quelconque des revendications précédentes, dans lequel le dispositif d'analyse des fluides (10) comprend un dispositif d'éclairage (23) pour éclairer le code à barres (18) et/ou le signe figuratif (20) sur la cuvette (12), avec l'étape de procédé suivante:
éclairer la cuvette (12) pendant la lecture du code à barres (18) et/ou du signe figuratif (20).

6. Procédé de détermination automatisée d'un analyte d'un échantillon de fluide selon la revendication 5, dans lequel le dispositif d'éclairage (23) fonctionne en mode pulsé.

7. Procédé de détermination automatisée d'un analyte d'un échantillon de fluide selon la revendication 5 ou 6, dans lequel le dispositif d'éclairage (23) comprend un guide de lumière (28) qui guide la lumière à partir d'une source de lumière (26) à la cuvette (12) insérée.

8. Procédé de détermination automatisée d'un analyte d'un échantillon de fluide selon l'une quelconque des revendications 5 à 7, dans lequel le dispositif d'éclairage (23) comprend un capteur de luminosité (25) spatialement associé au code à barres (18) et au signe figuratif (20), et un régulateur de luminosité, avec l'étape de procédé suivante:
régler la puissance lumineuse de la source de lumière (26) en fonction de la luminosité mesurée par le capteur de luminosité (25).
